# EUROPEAN PATENT SPECIFICATION

(11) **EP 0 648 047 B1**
(45) Date of publication and mention of the grant of the patent: **24.08.2005**
(21) Application number: 94115733.1
(22) Date of filing: 06.10.1994
(51) Int. Cl.: H04N 5/44, H04N 7/01

(54) **Method and apparatus for forming a video signal using motion estimation and signal paths with different interpolation processing**
Verfahren und Vorrichtung zum Bilden eines Videosignals durch Bewegungsschätzung und Signalwege mit verschiedenen Interpolationsverarbeitungen
Méthode et dispositif pour former un signal vidéo à l'aide d'un estimateur de mouvement et de voies de traitement de signal utilisant des procédés d'interpolation différents

(30) Priority: 11.10.1993 EP 93402506; 02.11.1993 EP 93117671
(43) Date of publication of application: 12.04.1995
(73) Proprietor: THOMSON multimedia, 92648 Boulogne Cédex (FR)
(72) Inventor: Knee, Michael, F-67000 Strasbourg (FR); Kerdranvat, Michel, F-67870 Bischoffsheim (FR); Hackett, Andrew, F-67530 Klingenthal (FR); Bolender, Nadine, F-67000 Strasbourg (FR)
(74) Representative: Hartnack, Wolfgang

(56) References cited:
- EP-A- 0 294 961
- EP-A- 0 561 561
- WO-A-91/20155
- US-A- 4 967 271
- SIGNAL PROCESSING OF HDTV; 29 FEBRUARY - 2 MARCH 1988;, L'AQUILA, IT pages 345 - 354 REUTER ET AL. 'Motion Vector Estimation for Improved Standards Conversion'
- BBC RESEARCH DEPARTMENT REPORT, no.11, September 1987, TADWORTH GB pages 1 - 20 THOMAS 'Television Motion Measurement for DATV and other Applications'
- SIGNAL PROCESSING OF HDTV, II; 30 AUGUST - 1 SEPTEMBER 1989;, TURIN, IT pages 649 - 655 HAGHIRI ET AL. 'A Motion Compensated Field Rate Conversion Algorithm'
- SIGNAL PROCESSING OF HDTV; 29 FEBRUARY - 2 MARCH 1988;, L'AQUILA, IT pages 393 - 399 FERNANDO ET AL. 'Motion Compensated Display Conversion'

## Description

The present invention relates to a method and to an apparatus for forming a video signal using motion estimation and signal paths with different interpolation processing.

### Background

The invention described here is part of a motion compensated field rate upconversion system, where intermediate fields of a television picture, not present at the input, are calculated by means of motion compensated interpolation. A typical application is conversion between 50Hz and 100Hz television signals for display flicker reduction.

US-A-4 967 271 discloses a television scan line doubler wherein pixel values are interpolated controlled by a motion detector. The motion detector signal switches between two different interpolation modes which each represent a similar interpolation quality. The field differences for several horizontally adjacent pixels are taken into account for generating the motion detector signal.

In Signal Processing of HDTV, II; 30 August - 1 September 1989; Turin, IT; pages 649 - 655, Haghiri et al., 'A Motion Compensated Field Rate Conversion Algorithm', a motion compensated field rate upconversion for an HDMAC receiver is described wherein a fall-back branch is included. A video output signal is formed from a video input signal using signal paths with different interpolation processing, using motion compensated interpolation means receiving the video input signal and motion information extractor means which extract motion information from the transmitted video input signal data stream. The motion estimation is carried out at transmitter side and corresponding motion vectors are transferred to the receiver, together with an 80/40/20ms mode information. In 80ms mode that is used for stationary picture content frame repetition is used for the upconversion. In 40ms mode, always a motion compensated upconversion using the transmitted motion vectors is carried out in the receiver. In the 20ms mode, always a fallback interpolation is performed in the receiver upconversion.

### Invention

It is one object of the invention to disclose a method of selecting an interpolation mode in relation to a confidence measurement of the related motion vector. This object is achieved by the method disclosed in claim 1.

It is a further object of the invention to disclose an apparatus, which utilises the inventive method. This object is achieved by the apparatus disclosed in claim 9.
In principle, every pixel in the intermediate fields can be the direct output of a motion compensated interpolator. In practice, however, there will always be areas of the picture where the motion is too fast or too complex to be estimated correctly. Patent application EP-A-0 648 046 of the applicant describes 'fallback processing' whereby a special non-compensated fallback mode or any comparable mode can be used in such areas.

The final output is in fact the result of a soft switch or fade between the motion compensated interpolation and the fallback mode, controlled by a measure of confidence in the reliability of the estimated motion vector. The confidence measure takes values between 0 and 1, where 0 (no confidence) selects the fallback mode only, 1 (maximum confidence) selects the motion compensated interpolation only, and intermediate values mix linearly between the two.
Advantageously, the confidence measure includes the following two components: a 'basic confidence measure' which reflects the error in the motion measurement, and a measure based on the speed of movement.

In principle, the inventive method is suited for forming a video signal using motion estimation and signal paths with different interpolation processing, in particular motion compensated interpolation and fallback interpolation, whereby the output signals of said different signal paths are combined in relation to a measure of confidence which is derived from a minimum motion estimation error of the input video signal, which is in particular block based.

Advantageous additional embodiments of the inventive method are resulting from the respective dependent claims.

In principle the inventive apparatus for forming a video signal using motion estimation and signal paths with different interpolation processing, in particular motion compensated interpolation and fallback interpolation, includes:
- motion compensated interpolation means and fallback interpolation means which receive said input video signal and the output pixel values of which are mixed in combining means in relation to a measure of confidence value which is derived in combining means from a block based minimum motion estimation error of the input video signal and from a related block motion vector or its components;
- motion estimation means which calculate from said input signal, or motion information extractor means which extract from the transmitted input signal data stream, said block based minimum motion estimation error and said related block motion vector or its components.

Advantageous additional embodiments of the inventive apparatus are resulting from the respective dependent claims.

### Drawings

Preferred embodiments of the invention are described with reference to the accompanying drawings, which show in:
- Fig. 1: example of law relating confidence to subblock matching error;
- Fig. 2: example of law relating confidence to estimated speed;
- Fig. 3: block diagram of confidence measurement circuit.

### Preferred embodiments

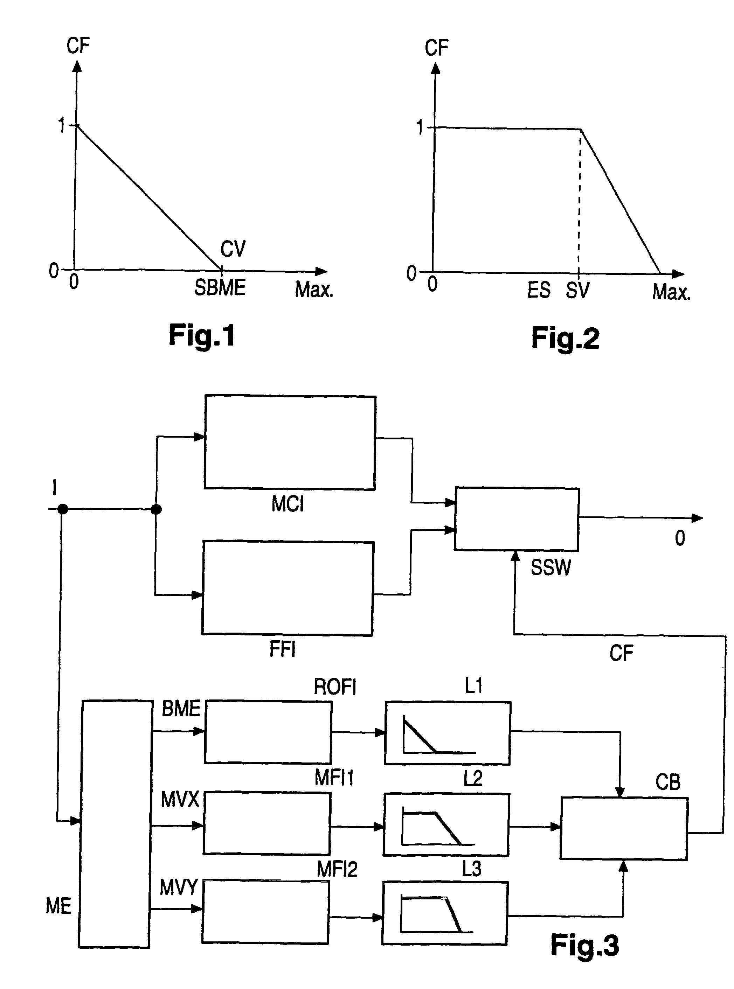

One method of motion measurement is block matching followed by localization using subblock matching, as described in EP-A-93402188 (EP-A-648 052) of the applicant.
Such subblock matching process produces motion vectors whose components may be passed through a median filter. In calculating the motion vectors, the subblock matching process or any other comparable process generates an error (e.g. the sum of absolute, or the square of, difference values between the according pixel values in the two blocks used for matching) for each candidate motion vector and the vector giving the minimum error is chosen.
It is the value of this minimum error which is used to calculate a basic measure of confidence according to the law illustrated in Fig. 1. If this subblock matching error SBME is zero, the confidence CF takes its maximum value of 1. As the error SBME increases to a cut-off value CV, the confidence decreases to its minimum value of zero. Other, similar relations (e.g. part of a sine or cosine function or a gaussian function) between subblock matching error and confidence may also be used for such limiting filter.
One problem with this basic measure of confidence is that the subblock matching process usually generates high errors, leading to low or zero confidence, around the edge of an object moving over a detailed background. This means that the edge will be interpolated using the fallback mode, even though the motion vectors themselves correctly follow the edge. A solution is to pass the subblock errors through a rank order filter, for example on a 3x3 window. The filter may be a median filter or another rank order filter; for example the third highest error value in the window may be selected.

Advantageously, the measure of confidence may be modified to take account of the speed ES of movement. The aim of this modification is to ensure that, as an object accelerates out of the range of motion speeds that can be estimated and coded with a motion vector, the interpolation switches smoothly into the fallback mode. An example of a suitable law that can be applied is given in Fig. 2. Again, other relations (e.g. part of a sine or cosine function or a gaussian function, different start value SV) between motion speed ES and confidence CF may be used.
It can be applied to the true motion speed or to the two motion vector components separately, taking the minimum or some other combination of the two results. The result is combined with the main measure of confidence, for example by taking the minimum or by multiplication.

In the confidence measurement circuit of Fig. 3 an input video signal, e.g. 50Hz, 2:1 or 60Hz, 2:1, is fed to a motion compensated interpolator MCI, to a fallback filter FFI and to a motion estimator ME. A soft switch SSW operates on the output signals of interpolator MCI and filter FFI and provides the final output signal O which may have the format 100/120Hz, 2:1 or 50/60Hz, 1:1. Switch SSW is controlled by a confidence signal CF coming from a combiner CB. Motion estimator ME calculates the block matching error BME, a horizontal component MVX and a vertical component MVY of the related motion vector. These values can also be transmitted if the motion estimator is located within a transmitter and the circuit of Fig. 3 is part of a receiver, e.g. a TV receiver. Then, circuit ME may extract the matching error and/or the motion vector and/or its components from the transmitted input signal data stream. The motion information can also be used in interpolator MCI. Error BME passes through a rank order filter ROFI, for instance a median filter, and a first weighting filter L1 operating according to the law of Fig. 1 and is then fed into a combiner CB.
The horizontal vector component MVX passes through a first median filter MFI1 and a second weighting filter L2 operating according to the law of Fig. 2 and is then fed into combiner CB.
The vertical vector component MVY passes through a second median filter MFI2 and a third weighting filter L3 operating according to the law of Fig. 2 and is then fed into combiner CB.
The combiner CB operates as described above and can work as a look-up table which is stored in memory means. The laws of filters L2 and L3 can be different (different function or start value SV). The laws represented by filters L1, L2 and L3 can be stored in look-up tables.
In case of specific picture data characteristics (e.g. camera/film mode) different laws can be selected or downloaded into the law memories.
If the chrominance components are not controlled together with the luminance components by signal CF, they can be handled by separate means according to Fig. 3, having laws designed especially for the chrominance components.
The invention can also be used for standards conversion, bit rate reduction, digital HDTV, digital VCR and MPEG1 or MPEG2 devices (IEC/ISO standard). In case of bit rate reduction the fallback processing may be intra field coding.

## Claims

1. Method for forming a video output signal (O) from a video input signal (I) using motion estimation (ME) and signal paths with different interpolation processing comprising a motion compensated interpolation (MCI) in one signal path and a further kind of interpolation (FFI) in the other signal path, wherein the output signals of said signal paths are combined (CB, SSW) in order to form said video output signal (O), **characterised in that** said further kind of interpolation is a fallback interpolation (FFI) for such cases where the motion is too fast or too complex to be estimated and that the output signals of said signal paths are combined in relation to a measure of confidence (CF) which is derived from a pixel block based minimum motion estimation error (BME) of the input video signal (I).

2. Method according to claim 1, wherein said measure of confidence (CF) is further derived from the value of a pixel block motion vector or from the values of the horizontal (MVX) and vertical (MVY) components of said pixel block motion vector.

3. Method according to claim 1 or 2, wherein the values of said motion estimation error (BME) pass through two-dimensional rank order filter means (ROFI), in particular a median filter, before being used to form (CB) said measure of confidence (CF).

4. Method according to claim 2 or 3, wherein the values of said pixel block motion vector or its components (MVX, MVY) pass through median filter means (MFI1, MFI2) before being used to form said measure of confidence (CF).

5. Method according to any of claims 1 to 4, wherein the values or pre-processed values of said motion estimation error (BME) and/or said pixel block motion vector or its components (MVX, MVY) pass through limiting filter means (L1, L2, L3) before being used to form said measure of confidence (CF).

6. Method according to any of claims 1 to 5, wherein from the values or pre-processed values of said motion estimation error (BME) and/or said pixel block motion vector or its components (MVX, MVY) the minimum is taken, or these values are multiplied, in order to form said measure of confidence (CF).

7. Method according to any of claims 1 to 6, wherein for deriving said measure of confidence (CF) law memory means are used and wherein in case of specific picture data characteristics, e.g. camera or film mode, different laws are selected or downloaded into the law memories.

8. Method according to any of claims 1 to 7, wherein the chrominance components are handled by a separate measure of confidence in order to form the respective video output signal using especially designed laws.

9. Apparatus for forming a video output signal (O) from a video input signal (I) using signal paths with different interpolation processing, wherein the output signals of said signal paths are combined (CB, SSW) in order to form said video output signal, said apparatus including:
- motion compensated interpolation means (MCI) receiving said video input signal (I);
- fallback interpolation means (FFI) for such video input signals where the motion is too fast or too complex to be estimated, said fallback interpolation means receiving said input video signal (I);
- motion estimation means (ME) which calculate from said video input signal (I) a pixel block based minimum motion estimation error (BME), or motion information extractor means (ME) which extract from the transmitted video input signal data stream a pixel block based minimum motion estimation error (BME);
- combining means (CB, SSW) which provide pixel values for said video output signal (O), wherein the output signals of said motion compensated interpolation means (MCI) and said fallback interpolation means (FFI) are mixed in relation to a measure of confidence value (CF) which is derived from said pixel block based minimum motion estimation error.

10. Apparatus according to claim 9, wherein said measure of confidence (CF) is further derived from the value of a pixel block motion vector or from the values of the horizontal (MVX) and vertical (MVY) components of said pixel block motion vector.

11. Apparatus according to claim 9 or 10, wherein said pixel block based minimum motion estimation error (BME) and said related block motion vector or its components (MVX, MVY) pass through rank order or median filter means (ROFI, MFI1, MFI2) and/or through limiting filter means (L1, L2, L3) before being used in said combining means (CB, SSW) to form said measure of confidence value (CF).

## Patentansprüche

1. Verfahren zur Bildung eines Videosignals (O) aus einem Video-Eingangssignal (I) unter Verwendung von Bewegungsabschätzung (ME) und von Signalwegen mit unterschiedlicher Interpolations-Verarbeitung, die eine bewegungskompensierte Interpolation (MCI) in einem Signalweg und eine weitere Art von Interpolation (FFI) in dem anderen Signalweg umfasst, wobei die Ausgangssignale der Signalwege kombiniert werden (CB, SSW), um das Video-Ausgangssignal (O) zu bilden, **dadurch gekennzeichnet, dass** die weitere Art von Interpolation eine Ersatz-(fall-back)-Interpolation (FFI) für solche Fälle ist, bei denen die Bewegung zu schnell oder zu kompliziert ist, um abgeschätzt zu werden, und dass die Ausgangssignale der Signalwege in Bezug auf ein Vertrauensmaß (CF) kombiniert werden, das von einem auf einem Pixelblock beruhenden minimalen Bewegungsabschätzungs-Fehler (BME) des Eingangs-Videosignals (I) abgeleitet wird.

2. Verfahren nach Anspruch 1, bei dem das Vertrauensmaß (CF) ferner von dem Wert eines Pixelblock-Bewegungsvektors oder von den Werten der horizontalen (MVX) und vertikalen (MVY) Komponenten des Pixelblock-Bewegungsvektors abgeleitet wird.

3. Verfahren nach Anspruch 1 oder 2, bei dem die Werte des Bewegungsabschätzungs-Fehlers (BME) zweidimensionale Rangordnungs-Filtermittel (ROF1), insbesondere ein Medianfilter, durchlaufen, bevor sie zur Bildung (CB) des Vertrauensmaßes (CF) verwendet werden.

4. Verfahren nach Anspruch 2 oder 3, bei dem die Werte des Pixelblock-Bewegungsvektors oder seiner Komponenten (MVX, MVY) durch Median-Filtermittel (MFI1, MFI2) verlaufen, bevor sie zur Bildung des Vertrauensmaßes (CF) verwendet werden.

5. Verfahren nach einem der Ansprüche 1 bis 4, bei dem die Werte oder die vorverarbeiteten Werte des Bewegungsabschätzungs-Fehlers (BME) und/oder des Pixelblock-Bewegungsvektors oder seiner Komponenten (MVX, MVY) durch begrenzende Filtermittel (L1, L2, L3) verlaufen, bevor sie zur Bildung des Vertrauensmaßes (CF) verwendet werden.

6. Verfahren nach einem der Ansprüche 1 bis 5, bei dem von den Werten oder den vorverarbeiteten Werten des Bewegungsabschätzungs-Fehlers (BME) und/oder des Pixelblock-Bewegungsvektors oder seiner Komponenten (MVX, MVY) das Minimum genommen wird oder diese Werte multipliziert werden, um das Vertrauensmaß (CF) zu bilden.

7. Verfahren nach einem der Ansprüche 1 bis 6, bei dem zur Ableitung des Vertrauensmaßes (CF) Gesetz-Speichermittel verwendet werden, und bei dem im Fall von spezifischen Bilddaten-Eiganschaften, z.B. Kamera- oder Film-Betrieb, unterschiedliche Gesetze ausgewählt oder in die Gesetz-Speicher heruntergeladen werden.

8. Verfahren nach einem der Ansprüche 1 bis 7, bei dem die Chrominanzkomponenten durch ein getrenntes Vertrauensmaß gehandhabt werden, um das entsprechende Video-Ausgangssignal unter Verwendung besonders entwickelter Gesetze zu bilden.

9. Vorrichtung zur Bildung eines Video-Ausgangssignals (O) aus einem Video-Eingangssignal (I) unter Verwendung von Signalwegen mit unterschiedlicher Interpolations-Verarbeitung, wobei die Ausgangssignale der Signalwege kombiniert werden (CB, SSW), um das Video-Ausgangssignal zu bilden, wobei die Vorrichtung einschließt:
- bewegungskompensierte Interpolationsmittel (MCI), die das Videosignal (I) empfangen;
- Ersatz-(fall-back)-Interpolationsmittel (FFI) für solche Video-Eingangssignale, bei denen die Bewegung zu schnell oder zu kompliziert ist, um abgeschätzt zu werden, wobei die Ersatz-Interpolationsmittel das Video-Eingangssignal (I) empfangen;
- Bewegungsabschätzungs-Mittel (ME), die aus dem Video-Eingangssignal (I) einen auf einem Pixelblock beruhenden minimalen Bewegungs-Abschätzungs-Fehler (BME) berechnen, oder Bewegungs-Informations-Herausziehmittel (ME), die aus dem übertragenen Video-Eingangssignal-Datenstrom einen auf einem Pixelblock beruhenden minimalen Bewegungsabschätzungs-Fehler (BME) herausziehen;
- Kombinationsmittel (CB, SSW), die Pixelwerte für das Video-Ausgangssignal (O) liefern, wobei die Ausgangssignale der bewegungskompensierten Interpolationsmittel (MCI) und der Ersatz-Interpolationsmittel (FFI) in Bezug auf einen Vertrauensmaß-Wert (CF) gemischt werden, der von dem auf einem Pixelblock beruhenden minimalen Bewegungsabschätzungs-Fehler abgeleitet wird.

10. Vorrichtung nach Anspruch 9, bei der das Vertrauensmaß (CF) ferner von dem Wert eines Pixelblock-Bewegungsvektors oder von dem Wert der horizontalen (MVX) und der vertikalen (MVY) Komponenten des Pixelblock-Bewegungsvektors abgeleitet wird.

11. Vorrichtung nach Anspruch 9 oder 10, bei der der auf dem Pixelblock beruhende minimale Bewegungsabschätzungs-Fehler (BME) und der betroffene Block-Bewegungsvektor oder seine Komponenten (MVX, MVY) durch Rangordnungs- oder Median-Filtermittel (ROF1, MFI1, MFI2) und/oder Begrenzungs-Filtermittel (L1, L2, L3) verlaufen, bevor sie in den Kombinationsmitteln (CB, SSW) verwendet werden, um den Vertrauensmaß-Wert (CF) zu bilden.

## Revendications

1. Procédé délaboration d'un signal vidéo de sortie (O) à partir d'un signal d'entrée (I) utilisant une estimation de mouvement (ME) et des trajets de signaux avec différents traitements d'interpolation comportant une interpolation compensée en mouvement (MCI) dans un trajet de signal et une autre sorte d'interpolation (FFI) dans l'autre trajet de signal, dans lequel les signaux de sortie desdits trajets de signaux sont combinés (CB, SSW) afin d'élaborer ledit signal vidéo de sortie (O), **caractérisé en ce que** ladite autre sorte d'interpolation est une interpolation de secours (FFI) pour les cas où le mouvement est trop rapide ou trop complexe pour être estimé et **en ce que** les signaux de sortie desdits trajets de signaux sont combinés en fonction d'une mesure de confiance (CF) qui est faite à partir d'une erreur d'estimation de mouvement (BME) évaluée en blocs de pixels du signal vidéo d'entrée (I).

2. Procédé selon la revendication 1, dans lequel ladite mesure de confiance (CF) est en outre déterminée à partir de la valeur d'un vecteur de mouvement évalué en blocs de pixels ou à partir des valeurs des composantes horizontale (MVX) et verticale (MVY) dudit vecteur de mouvement en blocs de pixels.

3. Procédé selon la revendication 1 ou 2, dans lequel les valeurs de ladite erreur d'estimation de mouvement (BME) traversent un moyen de filtrage bidimensionnel d'ordre hiérarchisé (ROFI), en particulier un filtre médian , avant d'être utilisées pour calculer (CB) ladite mesure de confiance (CF).

4. Procédé selon la revendication 2 ou 3, dans lequel les valeurs dudit vecteur de mouvement évalué en blocs de pixels ou de ses composantes (MVX, MVY) traversent un moyen de filtrage médian (MF1, MF2) avant d'être utilisées pour calculer ladite mesure de confiance (CF).

5. Procédé selon n'importe laquelle des revendications 1 à 4, dans lequel les valeurs ou les valeurs pré-traitées de ladite erreur d'estimation (BME) et/ou dudit vecteur de mouvement évalué en blocs de pixels ou de ses composantes (MVX, MVY) traversent un moyen de filtrage de limitation (L1, L2, L3) avant d'être utilisées pour calculer ladite mesure de confiance (CF).

6. Procédé selon n'importe laquelle des revendications 1 à 5, dans lequel à partir des valeurs ou des valeurs pré-traitées de la dite erreur d'estimation de mouvement (BME), et/ou du vecteur de mouvement évalué en blocs de pixels ou de ses composantes (MVX, MVY) on utilise la valeur minimale, ou ces valeurs sont multipliées, afin de calculer ladite mesure de confiance (CF).

7. Procédé selon n'importe laquelle des revendications 1à 6, dans lequel pour calculer ladite mesure de confiance (CF) on utilise un moyen de mémoire de fonctions et dans lequel, en cas de caractéristiques spécifiques de données d'image, par exemple, caméra ou mode de film, on choisit ou télécharge différentes fonctions dans les mémoires de fonctions.

8. Procédé selon n'importe laquelle des revendications 1 à 7, dans lequel les composantes de chrominance sont gérées par une mesure de confiance séparée afin d'élaborer le signal vidéo de sortie respectif en utilisant des fonctions spécialement conçues.

9. Appareil pour élaborer un signal vidéo de sortie (O) à partir d'un signal d'entrée vidéo (I) en utilisant des trajets de signaux avec différents traitements d'interpolation, dans lequel les signaux de sortie desdits trajets de signaux sont combinés (CB, SSW) afin d'élaborer ledit signal de sortie vidéo, ledit appareil comprenant les éléments suivants :
- un moyen d'interpolation compensée en mouvement (MCI) qui reçoit ledit signal d'entrée vidéo (I) ;
- un moyen d'interpolation de secours (FFI) pour des signaux d'entrée vidéo dont le mouvement est trop rapide ou trop complexe pour être estimé, ledit moyen d'interpolation de secours recevant ledit signal d'entrée vidéo (I) ;
- un moyen d'estimation de mouvement (ME) qui calcule à partir dudit signal d'entrée vidéo (I) une erreur d'estimation de mouvement (BME) minimale évaluée en blocs de pixels du signal d'entrée vidéo (I), ou
- un moyen d'extraction d'informations de mouvement (ME) qui extraie du flot de données du signal d'entrée vidéo émis une erreur d'estimation de mouvement (BME) minimale évaluée en blocs de pixels ;
- un moyen de combinaison (CB,SSW) qui fournit les valeurs de pixel pour ledit signal de sortie vidéo (O), dans lequel les signaux de sortie dudit moyen d'interpolation compensé en mouvement (MCI) et dudit moyen d'interpolation de secours sont mélangés en fonction d'une mesure de la valeur de confiance (CF) qui est calculée à partir de l'erreur d'estimation de mouvement minimale évaluée en blocs pixels.

10. Appareil selon la revendication 9, dans lequel ladite mesure de confiance (CF) est en outre calculée à partir de la valeur d'un vecteur de mouvement évaluée en blocs de pixels ou à partir de la valeur des composantes horizontale (MVX) et verticale (MVY) dudit vecteur de mouvement évalué en blocs de pixels.

11. Appareil selon la revendication 9 ou 10, dans lequel ladite erreur d'estimation (BME) minimale évaluée en blocs de pixels et ledit vecteur de mouvement concerné ou ses composantes (MVX, MVY) traverse un moyen de filtrage d'un ordre hiérarchisé ou médian (ROFI, MF1 , MF2) et/ou un moyen de filtrage de limitation (L1, L2, L3) avant d'être utilisée dans ledit moyen de combinaison (CB, SSW) pour constituer ladite mesure de confiance (CF).
